# EUROPÄISCHE PATENTSCHRIFT

(11) **EP 2 119 956 B1**
(45) Veröffentlichungstag und Bekanntmachung des Hinweises auf die Patenterteilung: **22.01.2014**
(21) Anmeldenummer: 08156261.3
(22) Anmeldetag: 15.05.2008
(51) Int. Cl.: F21S 8/10, B60Q 1/00, G02B 6/00

(54) **Scheinwerfer für ein Kraftfahrzeug mit einem Ringabstrahlkörper**
Headlight for a motor vehicle with a ring beam body
Phare pour un véhicule automobile doté d'un corps d'émission annulaire

(43) Veröffentlichungstag der Anmeldung: 18.11.2009
(73) Patentinhaber: Hella KGaA Hueck & Co., 59552 Lippstadt (DE)
(72) Erfinder: Wellige, Robert, 59329 Wadersloh (DE)

(56) Entgegenhaltungen:
- DE-A1- 10 338 788
- DE-A1-102004 020 154
- DE-A1-102006 051 058
- DE-A1-102006 051 060
- US-A1- 2008 002 400

## Beschreibung

Die vorliegende Erfindung betrifft einen Scheinwerfer für ein Kraftfahrzeug mit einem Scheinwerfergehäuse, in dem wenigstens ein Lichtmodul aufgenommen ist, das einen Ringabstrahlkörper aufweist, in den eine Struktur von lichtablenkenden Prismen eingebracht ist, über die in den Ringabstrahlkörper eingekoppeltes Licht wieder auskoppelbar ist, das in einer Horizontalebene und in einer Vertikalebene emittiert.

Scheinwerfer für Kraftfahrzeuge weisen wenigstens ein Lichtmodul auf, wobei bevorzugt ein Lichtmodul zur Emission eines Abblendlichtes und ein weiteres Lichtmodul zur Emission eines Fernlichtes im Scheinwerfergehäuse aufgenommen sind. Wenigstens eines der Lichtmodule besitzt einen Ringabstrahlkörper, über den ein Licht emittiert werden kann, das entweder als Positionslicht oder als Tagfahrlicht genutzt wird.

Auch die Nutzung des vom Ringabstrahlkörper emittierten Lichtes als Bremslicht, als Rücklicht oder als Blinklicht sowohl vorderseitig als auch rückseitig am Kraftfahrzeug stellt eine weitere Variante des Einsatzes eines Ringabstrahlkörpers dar. Zukünftig ist seitens des Gesetzgebers insbesondere ein Tagfahrlicht vorgegeben, wobei als Lichtquelle zunehmend Leuchtdioden zum Einsatz kommen. Das Positionslicht bzw. das Tagfahrlicht wird abhängig vom Fahrzeughersteller über geometrisch verschiedenartig ausgebildete Abstrahlkörper emittiert, wobei herstellerbezogen Ringabstrahlkörper vorgesehen sind, die sich bevorzugt um den Austrittsbereich des Abblendlichtes oder des Fernlichtes herum erstrecken.

Bekannte Ringabstrahlkörper erzeugen eine nahezu rotationssymmetrische Lichtverteilung, um damit die vom Gesetzgeber geforderten Werte für die Lichtstärken eines Positionslichtes zu erfüllen. Jedoch sind die lichttechnischen Anforderungen an ein Tagfahrlicht mit einer derartigen rotationssymmetrischen Lichtverteilung nur schwer zu erfüllen. Der Wirkungsgrad bezogen auf die Anforderung an ein Tagfahrlicht ist sehr gering, da eine typische Lichtverteilung eines Tagfahrlichtes eher elliptisch ausgebildet ist und sich in der Horizontalebene stärker erstreckt als in der Vertikalebene. Gerade wenn Leuchtdioden als Lichtquellen vorgesehen sind, deren Lichtstrom deutlich teurer ist als der Lichtstrom herkömmlicher Leuchtmittel, birgt die Verbesserung des Wirkungsgrades des Abstrahlkörpers ein erhebliches Einsparpotential.

Aus der DE 198 04 440 A1 ist ein stabförmiger Abstrahlkörper bekannt, der eine Struktur von lichtablenkenden Prismen aufweist. Das Licht wird über einen Lichteinkoppelanschluss in den Abstrahlkörper eingekoppelt und über der Länge im Wesentlichen gleichmäßig durch entsprechend ausgebildete lichtablenkende Prismen wieder ausgekoppelt. Bekannt ist hierin ein Abstrahlkörper mit einer homogenen Leuchtdichteverteilung über der Länge des stabförmig ausgebildeten Abstrahlkörpers. Mit zunehmendem Abstand von der Lichtquelle nimmt die Höhe der Prismen zu, um über die Länge des Abstrahlkörpers eine gleichbleibende Leuchtdichte zu erzielen. Jedoch ist der Einsatz eines derartigen stabförmigen Abstrahlkörpers nicht geeignet, eine Lichtverteilung zu erzeugen, die sich bevorzugt in der Horizontalebene erstreckt, ohne einen Verlust an Wirkungsgrad zu erzeugen.

Die DE 103 38 788 offenbart alle Merkmale des Oberbegriffs des Anspruchs 1.

Es ist daher die Aufgabe der vorliegenden Erfindung, einen Scheinwerfer für ein Kraftfahrzeug mit einem Ringabstrahlkörper bereitzustellen, der eine Emission eines Tagfahrlichtes mit einem hohen Wirkungsgrad ermöglicht.

Diese Aufgabe wird ausgehend von einem Scheinwerfer gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Prismen eine über dem Umfang des Ringabstrahlkörpers veränderliche Struktur aufweisen, die derart ausgebildet ist, dass die Erstreckung des emittierten Lichtfeldes in der Horizontalebene breiter ist als die Erstreckung des emittierten Lichtfeldes in der Vertikalebene.

Der Erfindung liegt der Gedanke zugrunde, einen Ringabstrahlkörper eines Scheinwerfers derart weiterzubilden, dass dieser zur Emission eines Tagfahrlichtes geeignet ist, wobei die Emission des Tagfahrlichtes den gesetzgeberischen Vorgaben entspricht. Durch gezielte Modifikation der lichtablenkenden Prismen hinsichtlich ihrer Ausbildung in Abhängigkeit von der Position auf dem Umfang des Ringabstrahlkörpers kann erfindungsgemäß ein Lichtfeld erzeugt werden, das in der Horizontalebene breiter ausgebildet ist als in der Vertikalebene. Damit wird die gesetzgeberische Vorgabe erfüllt, ein Tagfahrlicht bereitzustellen, das eine eher elliptische Lichtverteilung aufweist. Die Leuchtdichten auf den Prismen, die über der Auskoppelseite des Ringabstrahlkörpers abgebildet werden, werden in ihrer Ausdehnung derart verändert, dass die horizontale Ausdehnung der aus den verschiedenen Ringsegmenten emittierten Lichtbündel den gesetzlichen Vorgaben entspricht. Vergleicht man den Ringabstrahlkörper mit dem Zifferblatt einer Uhr, so entsprechen die Quadranten des Ringabstrahlkörpers, die die Horizontalebene durchlaufen, der 3 Uhr- und der 9 Uhr-Position, wohingegen die die Vertikalebene durchlaufenden Quadranten der 6 Uhr- bzw. 12 Uhr-Position entsprechen. Erfindungsgemäß gleichen sich folglich die Prismen in ihrer Struktur auf der 3 Uhr- und der 9 Uhr-Position einerseits und die Prismen auf der 6 Uhr- und der 12 Uhr-Position andererseits.

Der erfindungsgemäße Scheinwerfer weist einen Ringabstrahlkörper auf, der sich in einem Radius gleichförmig um eine Ringachse herum erstreckt, wobei die Prismen eine sich in Richtung des Radius erstreckende Breite aufweisen. Die Breite der Prismen ist über den Umfang des Ringabstrahlkörpers unterschiedlich ausgebildet. Folglich ist vorgesehen, dass die Breite der Prismen in den seitlichen, die Horizontalebene durchlaufenden Quadranten des Ringabstrahlkörpers größer ist als die Breite der Prismen in den oben liegenden und unten liegenden Quadranten des Ringabstrahlkörpers, die die Vertikalebene durchlaufen. Bezogen auf den Vergleich des Zifferblattes weisen die Prismen in der 3 Uhr- und in der 9 Uhr-Position eine große Breite auf, wohingegen die Prismen in der 6 Uhr-Position und in der 12 Uhr-Position eine geringe Breite umfassen. Wird ein Licht in den Ringabstrahlkörper eingekoppelt, so erfolgt zunächst über den gesamten Umfang des Ringabstrahlkörpers eine Auskopplung des Lichts über die vorderseitige Auskoppelfläche. Die Prismen sind im Wesentlichen parallel zueinander angeordnet, und der Auskoppelwinkel, über den sich das ausgekoppelte Lichtfeld für jedes Prisma einzeln erstreckt, wird mit Prismen geringerer Breite ebenfalls geringer. Werden die Prismen in den Quadranten des Ringabstrahlkörpers, die die Horizontalebene durchlaufen, breiter ausgeführt, so wird der Abstrahlwinkel des emittierten Lichtfeldes aufgeweitet. In den Bereichen, in denen die Breite der Prismen gering ausgeführt ist, verringert sich auch der Abstrahlwinkel des emittierten Lichtfeldes. Folglich bewirken die Prismen geringer Breite auf den Quadranten, die die Vertikalebene durchlaufen, ein schmales Emissionsfeld. Wird der Ringabstrahlkörper mit der erfindungsgemäßen Verteilung der Prismenstruktur in oder an ein Lichtmodul eines Scheinwerfers eingesetzt, ist eine elliptische Lichtverteilung erzielbar, wobei sich die Hauptachse der Ellipse in der Horizontalebene erstreckt.

Die Breite der Prismen ändert sich kontinuierlich, wobei die Prismen in Umfangsrichtung aneinander angrenzend parallel zueinander angeordnet sind und eine Änderung der Breite von Prisma zu Prisma erfolgt. Alternativ können auch Prismengruppen vorgesehen sein, die von Gruppe zu Gruppe einen Durchmessersprung aufweisen.

Das in den Ringabstrahlkörper eingekoppelte Licht erfährt bei der Auskopplung mittels der lichtablenkenden Prismen eine Streuung in Richtung der Horizontalebene, wobei die Streuung mit zunehmender Breite der Prismen größer wird. Der Ringabstrahlkörper weist zur Auskopplung eine vorderseitige Auskoppelfläche auf, durch die das Licht aus dem Ringabstrahlkörper auskoppelbar ist, wobei der Abstand der Prismen zur Ringvorderseite über dem Umfang variiert. Der Abstand der Prismen zur vorderseitigen Auskoppelfläche ist in den seitlichen, die Horizontalebene durchlaufenden Quadranten des Ringabstrahlkörpers derart gewählt, dass die Prismen zur Ringvorderseite defokussiert sind und eine vergrößerte Streubreite erzeugbar ist. Der Abstand der Prismen zur vorderseitigen Auskoppelfläche kann über die Einstichtiefe der Prismen beeinflusst werden, so dass die Einstichtiefe der Sägezähne, die die Prismen bilden, in den seitlichen Quadranten, die die Horizontalebene durchlaufen, tiefer ist als in den Quadranten, die die Vertikalebene durchlaufen.

Vorteilhafterweise kann die Struktur der Prismen derart ausgebildet sein, dass die Streubreite des emittierten Lichts in den seitlichen, die Horizontalebene durchlaufenden Quadranten des Ringabstrahlkörpers 10° bis 30° und bevorzugt 20° beträgt, wobei die Streubreite des emittierten Lichtes in den oben- und untenliegenden Quadranten des Ringabstrahlkörpers 5° bis 15° und bevorzugt 10° beträgt.

Gemäß einer weiteren Ausführungsform des erfindungsgemäßen Ringabstrahlkörpers weist dieser einen Lichteinkoppelanschluss auf, über den das Licht in den Ringabstrahlkörper einkoppelbar ist. Die Einkopplung kann über eine und bevorzugt zwei Leuchtdioden erfolgen, wobei die Lichteinkoppelanschlüsse über abgeschrägte Lichteinkoppelflächen gebildet werden.

Vorteilhafterweise ist im Scheinwerfergehäuse ein erstes Lichtmodul zur Aussendung von Abblendlicht und ein zweites Lichtmodul zur Aussendung von Fernlicht aufgenommen, wobei der Ringabstrahlkörper am ersten und/oder am zweiten Lichtmodul angeordnet ist. Der Ringabstrahlkörper kann sowohl zur Bereitstellung eines Positionslichtes als auch zusätzlich zur Bereitstellung eines Tagfahrlichtes Anwendung finden, wobei der Wechsel zwischen der Funktion Positionslicht und der Funktion Tagfahrlicht durch einen Wechsel der Helligkeit der lichteinkoppelnden Leuchtdioden erfolgen kann.

Weitere, die Erfindung verbessernde Maßnahmen werden nachstehend gemeinsam mit der Beschreibung eines bevorzugten Ausführungsbeispiels der Erfindung anhand der Figuren näher dargestellt.

### Es zeigt:

- Fig. 1: eine schematische Ansicht eines Scheinwerfers für ein Kraftfahrzeug mit einem Scheinwerfergehäuse, in dem zwei Lichtmodule aufgenommen sind, die jeweils einen Ringabstrahlkörper aufweisen;
- Fig. 2: eine Ansicht eines Ringabstrahlkörpers sowie die Einteilung in eine Horizontalebene und eine Vertikalebene, wobei auf dem Umfang des Ringabstrahlkörpers verteilt eine veränderliche Struktur von Prismen dargestellt ist und
- Fig. 3: Ein Diagramm mit einer Lichtverteilung, die durch einen erfindungsgemäßen Ringabstrahlkörper erzeugt wird, wobei die Lichtverteilung über der Horizontalebene und der Vertikalebene mit orthogonalem Blick auf die Ringachse dargestellt ist.

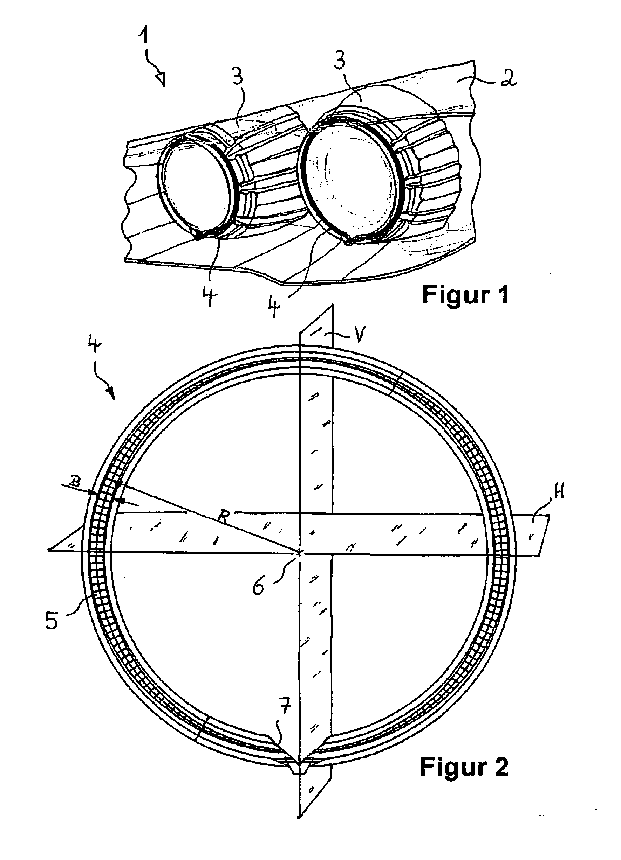

In Figur 1 ist ein Scheinwerfer 1 ausschnittweise gezeigt, dieser umfasst zunächst ein Scheinwerfergehäuse 2, das aus Richtung der Lichtemissionsseite dargestellt ist. Im Scheinwerfergehäuse 2 des Scheinwerfers 1 sind zwei Lichtmodule 3 gezeigt, die jeweils mit einem Ringabstrahlkörper 4 ausgeführt sind. Die Lichtmodule 3 sind einerseits zur Bereitstellung eines Abblendlichtes und andererseits zur Bereitstellung eines Fernlichtes vorgesehen, wobei sich die Ringabstrahlkörper 4 jeweils um die Lichtaustrittsbereiche des Hauptlichtes des jeweiligen Lichtmoduls 3 erstrecken.

Figur 2 zeigt eine Ansicht eines Ringabstrahlkörpers 4 aus Richtung der vorderseitigen Auskoppelfläche, wobei die Blickrichtung aus Richtung einer Ringachse 6 erfolgt, die die Rotationsachse des Ringabstrahlkörpers 4 bildet. Der Ringabstrahlkörper 4 wird in mehrere Quadranten aufgeteilt, die jeweils eine Teilung von 90° über dem Umfang des Ringabstrahlkörpers 4 beschreiben. Zur Benennung der Quadranten ist eine Horizontalebene H und eine Vertikalebene V über den Ringabstrahlkörper 4 dargestellt. Die seitlichen Quadranten, die sich auf der 3 Uhr- und der 9 Uhr-Position befinden, durchlaufen die Horizontalebene auf der linken und auf der rechten Seite in der Ansicht, wobei der oben und der unten liegende Quadrant auf der 6 Uhr- und auf der 12 Uhr-Position angeordnet ist und jeweils die Vertikalebene V kreuzt.

Der Ringabstrahlkörper 4 erstreckt sich symmetrisch um die Ringachse 6 herum und weist einen Radius R auf. Verteilt auf dem Umfang des Ringabstrahlkörpers 4 ist eine Struktur von Prismen 5 dargestellt, die in ihrer Struktur abhängig von der Position auf dem Umfang unterschiedlich ausgeführt sind. In den Quadranten des Ringabstrahlkörpers 4, die die Horizontalebene H durchlaufen, ist eine große Breite B der Prismen 5 vorgesehen, wobei die Quadranten des Ringabstrahlkörpers 4, die die Vertikalebene V durchlaufen, eine geringe Breite B der Prismen 5 zeigen. Wird Licht über den Lichteinkoppelanschluss 7 auf der Unterseite des Ringabstrahlkörpers 4 in diesen eingekoppelt, so wird über jedes einzelne der auf dem Umfang verteilten Prismen 5 ein Teil des Lichtes über die Vorderseite des Ringabstrahlkörpers 4 wieder ausgekoppelt. Weisen die Prismen 5 eine große Breite B auf, so erfolgt eine große Erstreckung des emittierten Lichtfeldes in Richtung zur Horizontalebene. Die Prismen sind etwa parallel zueinander und angrenzend aneinander angeordnet, so dass der Verlauf der Prismen 5 unabhängig von der Umfangsposition parallel zum Radius R angeordnet ist. Wird nun die Breite der Prismen in den Quadranten verringert, die die Vertikalebene V durchlaufen, so wird die Breite des Lichtfeldes ebenfalls verringert, in der die Prismen das Licht auskoppeln. Ist die Breite der Prismen in der 6 Uhr- und der 12 Uhr-Position folglich sehr gering, so folgt dadurch eine geringe Streuung in Richtung der Vertikalebene V des emittierten Lichtfeldes. Im Ergebnis wird über einen einzigen Ringabstrahlkörper 4 lediglich durch Modifikation der geometrischen Ausbildung der Prismen 5 hinsichtlich ihrer Verteilung über den Umfang ein elliptisches Lichtfeld erzeugt, wobei sich die Hauptachse der Ellipse entlang der Horizontalebene H erstreckt.

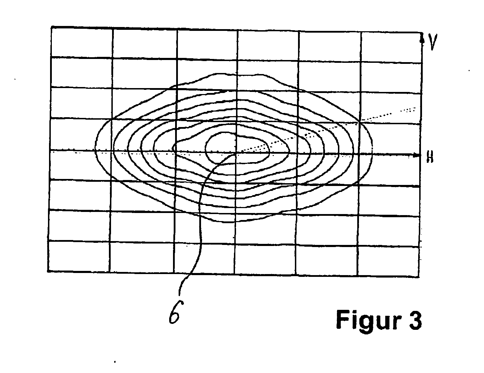

Figur 3 zeigt ein Diagramm der Verteilung eines Lichtfeldes, das über einen erfindungsgemäßen Ringabstrahlkörper emittiert wird. Im Ursprung des Diagramms ist die Ringachse 6 angeordnet, und das emittierte Lichtfeld ist aus Richtung der Ringachse 6 aufgenommen. Es ist deutlich zu erkennen, dass die Erstreckung in der Horizontalebene H etwa doppelt so groß ist wie die Erstreckung des Lichtfeldes in der Vertikalebene V. Im Ergebnis kann durch einfache Modifikation der Struktur der Prismen 5 über den Umfang der Ringabstrahlkörpers 4 ein Lichtfeld emittiert werden, das den gesetzlichen Vorgaben eines Tagfahrlichtes entspricht.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere ist jede Kombination der genannten Ausführungsformen des Ringabstrahlkörpers untereinander möglich, um den Wirkungsgrad der Lichtauskopplung in Form des gesetzlich geforderten Lichtfeldes weiter zu erhöhen.

### Bezugszeichenliste

- 1: Scheinwerfer
- 2: Scheinwerfergehäuse
- 3: Lichtmodul
- 4: Ringabstrahlkörper
- 5: Prisma
- 6: Ringachse
- 7: Lichteinkoppelanschluss
- R: Radius
- B: Breite
- H: Horizontalebene
- V: Vertikalebene

## Patentansprüche

1. Scheinwerfer (1) für ein Kraftfahrzeug mit einem Scheinwerfergehäuse (2), in dem wenigstens ein Lichtmodul (3) aufgenommen ist, das einen Ringabstrahlkörper (4) aufweist, in den eine Struktur von lichtablenkenden Prismen (5) eingebracht ist, über die in den Ringabstrahlkörper (4) eingekoppeltes Licht wieder auskoppelbar ist, das in einer Horizontalebene (H) und in einer Vertikalebene (V) emittiert, wobei sich der Ringabstrahlkörper (4) in einem Radius (R) um eine Ringachse (6) herum erstreckt, wobei die Prismen (5) eine sich in Richtung des Radius (R) erstreckende Breite (B) aufweisen,
**dadurch gekennzeichnet, dass** die Prismen (5) eine über dem Umfang des Ringabstrahlkörpers (4) veränderliche Struktur aufweisen, die derart ausgebildet ist, dass die Erstreckung des emittierten Lichtfeldes in der Horizontalebene (H) breiter ist als die Erstreckung des emittierten Lichtfeldes in der Vertikalebene (V), wobei die Breite (B) der Prismen (5) über dem Umfang des Ringabstrahlkörpers (4) unterschiedlich ausgebildet ist.

2. Scheinwerfer (1) nach Anspruch 1, **dadurch gekennzeichnet, dass** die Breite (B) der Prismen (5) in den seitlichen, die Horizontalebene (H) durchlaufenden Quadranten des Ringabstrahlkörpers (4) größer ist als die Breite (B) der Prismen (5) in den oben liegenden und unten liegenden Quadranten des Ringabstrahlkörpers (4), die die Vertikalebene (V) durchlaufen.

3. Scheinwerfer (1) nach einem der Ansprüche 1 oder 2, **dadurch gekennzeichnet, dass** sich die Breite (B) der Prismen (5) kontinuierlich
ändert, wobei die Prismen (5) in Umfangsrichtung aneinander angrenzend angeordnet sind und eine Änderung der Breite (B) von Prisma (5) zu Prisma (5) erfolgt.

4. Scheinwerfer (1) nach einem der vorgenannten Ansprüche, **dadurch gekennzeichnet, dass** das in den Ringabstrahlkörper (4) eingekoppelte Licht bei Auskopplung mittels der Prismen (5) eine Streuung in Richtung der Horizontalebene (H) erfährt, wobei die Streuung mit zunehmender Breite der Prismen (B) größer wird.

5. Scheinwerfer (1) nach einem der vorgenannten Ansprüche, **dadurch gekennzeichnet, dass** der Ringabstrahlkörper (4) eine vorderseitige Auskoppelfläche aufweist, durch die das Licht aus dem Ringabstrahlkörper (4) auskoppelbar ist, wobei der Abstand der Prismen (5) zur Ringvorderseite über dem Umfang variiert.

6. Scheinwerfer (1) nach Anspruch 5, **dadurch gekennzeichnet, dass** der Abstand der Prismen (5) zur vorderseitigen Auskoppelfläche in den seitlichen, die Horizontalebene (H) durchlaufenden Quadranten des Ringabstrahlkörpers (4) derart gewählt ist, dass die Prismen (5) zur Ringvorderseite defokussiert sind und eine vergrößerte Streubreite erzeugbar ist.

7. Scheinwerfer (1) nach einem der vorgenannten Ansprüche, **dadurch gekennzeichnet, dass** die Struktur der Prismen (5) derart ausgebildet ist, dass die Streubreite des emittierten Lichtes in den seitlichen, die Horizontalebene (H) durchlaufenden Quadranten des Ringabstrahlkörpers (4) 10° bis 30°, vorzugsweise 20° beträgt und die Streubreite des emittierten Lichtes in den oben- und unten liegenden Quadranten des Ringabstrahlkörpers (4) 5° bis 15°, vorzugsweise 10° beträgt.

8. Scheinwerfer (1) nach einem der vorgenannten Ansprüche, **dadurch gekennzeichnet, dass** die Prismen (5) sägezahnartig ausgeführt sind, wobei die Einstichtiefe der sägezahnartigen Prismen (5) in den die Horizontalebene (H) durchlaufenden Quadranten des Ringabstrahlkörpers (4) größer ist als in den die Vertikalebene (V) durchlaufenden Quadranten des Ringabstrahlkörpers (4).

9. Scheinwerfer (1) nach einem der vorgenannten Ansprüche, **dadurch gekennzeichnet, dass** der Ringabstrahlkörper (4) wenigstens einen Lichteinkoppelanschluss (7) aufweist, über den das Licht in den Ringabstrahlkörper (4) einkoppelbar ist.

10. Scheinwerfer (1) nach einem der vorgenannten Ansprüche, **dadurch gekennzeichnet, dass** im Scheinwerfergehäuse (2) ein erstes Lichtmodul (3) zur Aussendung von Abblendlicht und ein zweites Lichtmodul zur Aussendung von Fernlicht aufgenommen ist, wobei der Ringabstrahlkörper (4) am ersten und/oder am zweiten Lichtmodul (3) angeordnet ist.

11. Scheinwerfer (1) nach einem der vorgenannten Ansprüche, **dadurch gekennzeichnet, dass** das vom Ringabstrahlkörper (4) ausgesendete Licht ein Tagfahrlicht und/oder ein Positionslicht ist.

## Claims

1. Headlamp (1) for a vehicle comprising a headlamp housing (2) receiving at least one light module (3) having a circular radiating body (4) in which a structure of light-deflecting prisms (5) is arranged, by means of which light coupled into the circular radiating body (4) can be coupled out again, being emitted in a horizontal plane (H) and a vertical plane (V), wherein
the circular radiating body (4) extending in a radius (R) around a ring axis (6), the prisms (5) having a width (B) extending in the direction of the radius (R),
**characterized in that** the prisms (5) having, across the circumference of the circular radiating body (4), a changing structure being embodied so that the extension of the emitted light field in the horizontal plane (H) is wider than the extension of the emitted light field in the vertical plane (V), wherein the width (B) of the prisms (5) varies across the circumference of the circular radiating body (4).

2. Headlamp (1) according to Claim 1, **characterized in that** the width (B) of the prisms (5) in the lateral quadrants of the circular radiating body (4) running through the horizontal plane (H) is larger than the width (B) of the prisms (5) in the upper and lower quadrants of the circular radiating body (4) running through the vertical plane(V).

3. Headlamp (1) according to one of the Claims 1 or 2, **characterized in that** the width (B) of the prisms (5) changes continuously, wherein the prisms (5) are arranged circumferentially adjacent to each other and a change of the width (B) takes place from prism (5) to prism (5).

4. Headlamp (1) according to one of the above Claims, **characterized in that** the light coupled into the circular radiating body (4) is distributed in direction of the horizontal plane (H) when coupled-out via the prisms (5), the distribution increasing with the increasing width of the prisms (B).

5. Headlamp (1) according to one of the above Claims, **characterized in that** the circular radiating body (4) has on its front side a decoupling surface for the coupling-out of the light from the circular radiating body (4), wherein the distance of the prisms (5) to the face of the ring varies over the circumference.

6. Headlamp (1) according to Claim 5, **characterized in that** the distance of the prisms (5) to the front-side decoupling surface in the lateral quadrant of the circular radiating body (4) running through the horizontal plane (H) is selected so that the prisms (5) are defocussed toward the front face and an increase in distribution is achievable.

7. Headlamp (1) according to one of the above Claims, **characterized in that** the structure of the prisms (5) is embodied so that the distribution of the emitted light in the lateral quadrant of the circular radiating body (4) running through the horizontal plane (H) is 10° to 30°, preferably 20° and the distribution of the emitted light in the upper and lower quadrants of the circular radiating body (4) is 5° to 15°, preferably 10°.

8. Headlamp (1) according to one of the above Claims, **characterized in that** the prisms (5) are embodied serrated, wherein the penetration depth of the serrated prisms (5) into the lateral quadrant of the circular radiating body (4) running through the horizontal plane (H) is larger than into the quadrants of the circular radiating body (4) running through the vertical plane (V).

9. Headlamp (1) according to one of the above Claims, **characterized in that** the circular radiating body (4) comprises at least one connection for the coupling-in of light (7), by means of which the light can be coupled into the circular radiating body (4).

10. Headlamp (1) according to one of the above Claims, **characterized in that** the headlamp housing (2) contains a first light module (3) for the sending of low beam light and a second light module for the sending of high beam light, wherein the circular radiating body (4) is arranged on the first and/or on the second light module (3).

11. Headlamp (1) according to one of the above Claims, **characterized in that** the light sent from the circular radiating body (4) is a daytime running light and/ or a position light.

## Revendications

1. Projecteur (1) pour un véhicule automobile avec un boîtier de projecteur (2) dans lequel au moins un module de lumière (3) est intégré, qui présente un corps annulaire rayonnant (4) dans lequel une structure à prismes de déflexion de lumière (5) est inséré, par lesquels la lumière couplée au corps annulaire rayonnant (4) peut être découplée qui émet dans un plan horizontal (H) et dans un plan vertical (V), le corps annulaire rayonnant (4) s'étendant dans un rayon (R) autour d'un axe annulaire (6), les prismes (5) présentant une largeur (B) qui s'étend dans la direction du rayon (R),
**caractérisé en ce que**
les prismes (5) présentent une structure variable sur la circonférence du corps annulaire rayonnant (4) qui est réalisée de telle manière que l'extension du champs de lumière émis au plan horizontal (H) soit plus large que l'extension du champs de lumière émis au plan vertical (V), la largeur (B) des prismes (5) variant sur la circonférence du corps annulaire rayonnant (4).

2. Projecteur (1) selon la revendication 1, **caractérisé en ce que** la largeur (B) des prismes (5) dans les quadrants latéraux du corps annulaire rayonnant (4) passant par le plan horizontal (H) est supérieure à la largeur (B) des prismes (5) dans les quadrants supérieurs et inférieurs du corps annulaire rayonnant (4) passant par le plan vertical (V).

3. Projecteur (1) selon l'une des revendications 1 ou 2, **caractérisé en ce que** la largeur (B) des prismes (5) change continuellement, les prismes (5) étant disposés dans le sens de la circonférence les uns aux autres de manière adjacente et une modification de la largeur (B) étant réalisée de prisme (5) à prisme (5).

4. Projecteur (1) selon l'une des revendications précédentes, **caractérisé en ce que** la lumière couplée au corps annulaire rayonnant (4) est diffusée dans la direction du plan horizontal (H) lors du découplage par les prismes (5), la dispersion grandissant en même temps que la largeur des prismes (B) grandit.

5. Projecteur (1) selon l'une des revendications précédentes, **caractérisé en ce que** le corps annulaire rayonnant (4) présente une surface de découplage avant par laquelle la lumière peut être découplée du corps annulaire rayonnant (4), la distance des prismes (5) variant par rapport à la face avant de l'anneau sur la circonférence.

6. Projecteur (1) selon la revendication 5, **caractérisé en ce que** la distance des prismes (5) à la surface de découplage avant dans les quadrants verticaux du corps annulaire rayonnant (4) passant par le plan horizontal (H) est choisie de telle manière que les prismes (5) soient défocalisés vers la face avant de l'anneau et une largeur de dispersion agrandie puisse être générée.

7. Projecteur (1) selon l'une des revendications précédentes, **caractérisé en ce que** la structure des prismes (5) est réalisée de telle manière que la dispersion de la lumière émise dans les quadrants verticaux du corps annulaire rayonnant (4) passant par le plan horizontal (H) s'élève à 10° à 30°, de préférence 20°, et que la dispersion de la lumière émise dans les quadrants supérieurs et inférieurs du corps annulaire rayonnant (4) s'élève à 5° à 15°, de préférence 10°.

8. Projecteur (1) selon l'une des revendications précédentes, **caractérisé en ce que** les prismes (5) sont réalisés en forme de dent de scie, la profondeur d'insertion des prismes en forme de dent de scie (5) dans les quadrants du corps annulaire rayonnant (4) passant par le plan horizontal (H) est supérieure à celle dans les quadrants du corps annulaire rayonnant (4) passant par le plan vertical (V).

9. Projecteur (1) selon l'une des revendications précédentes, **caractérisé en ce que** le corps annulaire rayonnant (4) présente au moins une connexion de couplage de lumière (7) par laquelle la lumière peut être couplée au corps annulaire rayonnant (4).

10. Projecteur (1) selon l'une des revendications précédentes, **caractérisé en ce que** le boîtier de projecteur (2) contient un premier module de lumière (3) pour émettre le feu code et un deuxième module de lumière pour émettre le feu de route, le corps annulaire rayonnant (4) étant disposé au premier et/ou deuxième module de lumière (3).

11. Projecteur (1) selon l'une des revendications précédentes, **caractérisé en ce que** la lumière émise par le corps annulaire rayonnant (4) est un feu de diurne et/ou un feu de position.
